# EUROPÄISCHE PATENTSCHRIFT

(11) **EP 0 560 031 B1**
(45) Veröffentlichungstag und Bekanntmachung des Hinweises auf die Patenterteilung: **06.12.1995**
(21) Anmeldenummer: 93101197.7
(22) Anmeldetag: 27.01.1993
(51) Int. Cl.: F16B 7/04

(54) **Vorrichtung zur Fixierung von Bauelementen**
Device for fixing building elements
Dispositif pour la fixation d'éléments de construction

(30) Priorität: 11.03.1992 DE 4207666
(43) Veröffentlichungstag der Anmeldung: 15.09.1993
(73) Patentinhaber: Daimler-Benz Aerospace Airbus Gesellschaft mit beschränkter Haftung, 21129 Hamburg (DE)
(72) Erfinder: Kirma, Safa, W-2000 Wedel/Holstein (DE)
(74) Vertreter: Hansmann, Dierk, Dipl.-Ing.

(56) Entgegenhaltungen:
- EP-A- 414 510
- DE-A- 1 935 977
- FR-A- 2 136 936
- FR-A- 2 253 455
- FR-A- 2 375 479
- GB-A- 538 730
- US-A- 5 028 899

## Beschreibung

Die Erfindung betrifft eine Vorrichtung zur Fixierung von Bauelementen, die relativ zu ihrer Querschnittfläche eine große Längserstreckung aufweisen, insbesondere zur Verwendung im Bereich der Luft- und Raumfahrt, die eine einer Montagefläche zuwendbare Halterung aufweist und mit mindestens einer Ausnehmung versehen ist, die sich im wesentlichen senkrecht zur Montagefläche erstreckt und in der ein Verbindungselement geführt ist und bei der das Verbindungselement im Bereich seiner der Montagefläche zugewandten Ausdehnung in ein die Halterung mindestens teilweise ausbildendes Arretierungselement eingreift, und bei der zur Ausbildung mindestens eines zur Führung des Bauelementes vorgesehenen Aufnahmeraumes übereinander mindestens zwei den Aufnahmeraum jeweils bereichsweise begrenzende Einfassungselemente angeordnet sind und mindestens ein Spannelement zur gleichzeitigen Einspannung des Bauelementes im Bereich des Aufnahmeraumes sowie zur Verspannung der Arretierungselemente im Bereich der Montagefläche mit dem Verbindungselement koppelbar ist
Zur Fixierung derartiger Bauelemente, beispielsweise von Kabeln, Rohrleitungen, Stangen oder Seilen, werden verbreitet Schellen, Bügel oder Kabelbinder verwendet, mit deren Hilfe die Bauelemente im Bereich einer tragenden Struktur verlegt werden. Zur Herstellung der erforderlichen Fixierung ist es oft erforderlich, die Halterungselemente mit Hilfe von Schrauben oder anderen Befestigungsmitteln mit einer tragenden Struktur zu verbinden. Sowohl das Einsetzen der Bauelemente in die Halterungen als auch die Fixierung im Bereich der tragenden Struktur erfordert insbesondere bei beengten räumlichen Verhältnissen einen hohen Arbeitsaufwand. Darüber hinaus sind bei einer Verlegung von einer Mehrzahl im wesentlichen parallel zueinander verlaufender Bauelemente eine große Anzahl von Halterungselementen erforderlich, die sowohl die Durchführung des Montagevorganges umständlich macht als auch eine erhebliche Montagezeit zur Folge hat. Darüber hinaus ist nicht sichergestellt, daß alle Halterungselemente mit der erforderlichen Festigkeit mit der tragenden Struktur verbunden sind.

Aus der EP-A-414 510 ist bereits eine Vorrichtung zur Fixierung von Bauelementen mit großer Längserstreckung bekannt. Die Vorrichtung besteht aus zwei Schellen, die über einen Gewindebolzen verspannbar sind. Der Gewindebolzen ist im Bereich eines Endes seiner Ausdehnung mit einer Spannmutter versehen. Im Bereich des anderen Endes seiner Ausdehnung ist der Gewindebolzen in eine Spannplatte eingeschraubt. Die Spannplatte hintergreift Ränder einer Öffnung eines Halterungsprofils, das als Montagefläche dient. Bei einem Anziehen der Spannmutter erfolgt eine gegenseitige Verspannung der Bauteile, so daß eine Fixierung der Vorrichtung im Bereich der Montageschiene sowie eine Fixierung der langgestreckten Bauelemente innerhalb der Vorrichtung gewährleistet ist. Die Spannplatte wird in einer Breite ausgeführt, die geringer als eine Öffnungsbreite der Montageschiene ist. Die Länge der Spannplatte ist größer als die Breite dieser Öffnung ausgebildet. Hierdurch wird ein Einführen in die Montageschiene in einer Querpositionierung und eine Verspannung in einer Längspositionierung ermöglicht.

Aufgabe der vorliegenden Erfindung ist es, eine Vorrichtung der einleitend genannten Art derart zu verbessern, daß die Montage vereinfacht und beschleunigt wird.

Diese Aufgabe wird erfindungsgemäß dadurch gelöst, daß das Arretierungselement vom Verbindungselement spreizbar ist.

Durch die Kopplung des Verbindungselementes mit dem Arretierungselement ist es in einfacher Weise möglich, durch eine Verschiebung des Verbindungselementes entlang der Ausnehmung eine Verspannung des Arretierungselementes relativ zur Montagefläche vorzunehmen. Bei einer Ausbildung der Montagefläche im Bereich einer dünnen Platte wird durch die Spreizung des Arretierungselementes die Platte hinterkrallt und dadurch ein Abheben der Vorrichtung von der tragenden Struktur verhindert. Durch die Begrenzung der Aufnahmeräume durch jeweils zwei Einfassungselemente wird der Montagevorgang erheblich vereinfacht. Es ist so beispielsweise möglich, zunächst das der Montagefläche zugewandte Einfassungselement im Bereich der Montagefläche anzuordnen, anschießend die Bauelemente einzulegen und danach das weitere Einfassungselement auf die Bauelemente und das erste Einfassungselement aufzusetzen.

Ebenfalls ist es denkbar, zunächst die Bauelemente mit Hilfe der Einfassungselemente zu umschließen und danach die Bauelemente gemeinsam mit den Einfassungselementen in den Bereich der Montagefläche zu führen. Durch die gleichzeitige Einspannung der Bauelemente und der Durchführung der Arretierung im Bereich der Montagefläche wird der erforderliche Arbeitsaufwand erheblich reduziert. Nach einem Einsetzen der Bauelemente in die Aufnahmeräume ist es lediglich erforderlich, einen Verspannvorgang, der gegebenenfalls mit Hilfe von einem oder mehreren Verspannelementen durchgeführt wird, auszuführen und hierdurch unterschiedliche und nacheinander durchzuführende Arbeitsgänge zu vermeiden. Insbesondere ist durch diese Arbeitsweise sichergestellt, daß die erforderlichen Arretierungen im Bereich der Montagefläche zuverlässig erfolgen. Dies ist insbesondere deshalb kritisch, weil die Arretierungselemente nach einer erfolgten Montage nicht mehr sichtbar sind und sich deshalb bei üblichen Vorrichtungen einer zuverlässigen Kontrolle entziehen.

Zur Durchführung der Verspannung des Arretierungselementes im Bereich der tragenden Struktur durch eine Zugkraft wird vorgeschlagen, daß das Verbindungselement im wesentlichen stiftförmig ausgebildet ist und im Bereich seiner dem Arretierungselement zugewandten Ausdehnung einen Spreizkopf aufweist sowie im Bereich seiner dem Spreizkopf abgewandten Ausdehnung mit einem Außengewinde versehen ist, in das eine die Spannvorrichtung ausbildende Mutter eingreift.

Eine unbeabsichtigte Lockerung der Arretierung im Bereich der tragenden Struktur sowie der Fixierung der Bauelemente im Bereich des Aufnahmeraumes kann dadurch verhindert werden, daß die Mutter im Bereich eines Bedienelementes angeordnet ist sowie mit einer entlang eines äußeren Umfanges angeordneten Rastung versehen ist, in die ein mit einem der Einfassungselemente verbundener Sperrhebel eingreift.

Zur Verhinderung einer Vielzahl von Auflagepunkten, die bei einem Auftreten von Fertigungstoleranzen eine gleichmäßige Einspannung der Bauelemente verhindern würden, wird vorgeschlagen, daß zwischen mindestens zwei nebeneinander angeordneten Aufnahmeräumen zur Realisierung einer Spannfunktion eine Aussparung angeordnet ist.

Eine übersichtliche parallele Verlegung der Bauelemente wird dadurch ermöglicht, daß mindestens zwei Aufnahmeräume in einer Lage nebeneinander angeordnet sind. Es ist aber auch möglich, daß zumindest zwei Aufnahmeräume in übereinander angeordneten Ebenen vorgesehen sind.

Zur Reduktion der Anzahl der verwendeten Komponenten bei einer mehrlagigen Anordnung der Bauelemente wird vorgeschlagen, daß mindestens ein Einfassungselement im Bereich von zwei einander abgewandter Begrenzungsflächen mit die Aufnahmeräume teilweise ausbildenden Vertiefungen versehen ist.

Zur Verbesserung der Einspannung der Bauelemente im Bereich der Aufnahmeräume wird vorgeschlagen, daß im Bereich mindestens eines der Aufnahmeräume mindestens ein Vorsprungelement angeordnet ist, das in den Aufnahmeraum hineinragt. Hierdurch werden auch Verformungen der Bauelemente durch die Spannkräfte vermieden.

Insbesondere ist zur Gewährleistung einer verdrehungsfreien Verlegung der Bauelemente auch daran gedacht, daß das Vorsprungelement stegförmig ausgebildet und mit einer dem Bauelement zuwendbaren gerundeten Kontur versehen ist. Der Eingriff kann in einem Schlitz der Bauelemente erfolgen. Insbesondere ist daran gedacht, den Schlitz durchgehend auszubilden.

Eine Betätigung einer Mehrzahl von Arretierungselementen mit Hilfe eines gemeinsamen Verbindungselementes wird dadurch ermöglicht, daß das Verbindungselement im Bereich seiner dem Bedienelement abgewandten Ausdehnung in ein Verteilelement einmündet, das in die Arretierungselemente eingreifende Verriegelungselemente trägt.

Zur Gewährleistung einer ausreichend genauen Positionierung bei einer gleichzeitigen Betätigung von mehreren Arretierungselementen wird vorgeschlagen, daß mindestens eines der Verriegelungselemente sowohl im Bereich seiner einem der Einfassungselemente zugewandten Ausdehnung als auch im Bereich seiner einer Basisplatte zugewandten Ausdehnung in Führungsausnehmungen gelagert ist.

Eine Betätigung der Arretierungselemente durch eine Schubbeaufschlagung der Verbindungselemente kann dadurch erfolgen, daß das Verbindungselement im Bereich seiner dem Arretierungselement abgewandten Ausdehnung mit einer Auflagefläche versehen ist, die von einer das Verbindungselement in den Bereich des Arretierungselementes hineinverschiebenden Traverse beaufschlagbar ist.

Eine Reduktion der Anzahl der verwendeten Komponenten kann dabei dadurch erfolgen, daß die Traverse als ein Einfassungselement ausgebildet ist.

Eine weitere Reduktion der unabhängig voneinander zu handhabenden Bauelemente kann dadurch erfolgen, daß das der Montagefläche abgewandte Einfassungselement relativ zu mindestens einem weiteren Einfassungselement verschwenkbar angeordnet ist.

Zur Ermöglichung einer ausreichenden Fixierung der Einfassungselemente relativ zueinander ohne eine Verwendung von Schraubverbindungen wird vorgeschlagen, daß mindestens zwei Einfassungselemente von mindestens einem in eine Rastung eingreifenden Spannbügel miteinander verbindbar sind.

In der Zeichnung sind Ausführungsbeispiele der Erfindung schematisch dargestellt. Es zeigen:
- Fig. 1: einen Querschnitt durch eine Vorrichtung mit Verbindungselementen, die teilweise als Gewindestifte ausgebildet sind und bei der vier Aufnahmeräume nebeneinander angeordnet sind,
- Fig. 2: einen Querschnitt durch eine Vorrichtung, bei der jeweils zwei Aufnahmeräume nebeneinander und zwei Aufnahmeräume übereinander angeordnet sind und bei der ein zentrales Montageelement vorgesehen ist, das eine Platte beaufschlagt, die zwei Arretierungselemente positioniert,
- Fig. 3: eine ähnliche Vorrichtung wie in Figur 2, bei der jedoch lediglich ein zentrales Arretierungselement vorgesehen ist,
- Fig. 4: eine weitere Vorrichtung, bei der jeweils zwei Aufnahmeräume nebeneinander und übereinander angeordnet sind und bei der zwei Arretierungselemente von zwei Verbindungselementen positioniert werden,
- Fig. 5: einen Querschnitt durch eine Vorrichtung, bei der ein Einfassungselement als Quertraverse ausgebildet und über Spannbügel mit einem anderen Einfassungselement verbindbar ist,
- Fig. 6: einen Querschnitt durch ein spreizbares Arretierungselement, das durch ein Anheben des Verbindungselementes verspreizt wird **und**
- Fig. 7: einen Querschnitt durch ein Arretierungselement, das durch Absenken des Verbindungselementes gespreizt wird.

Die Vorrichtung zur Fixierung von Bauelementen (1) besteht im wesentlichen aus Einfassungselementen (2), die jeweils bereichsweise Aufnahmeräume für die Bauelemente (1) begrenzen. Zur Befestigung der Vorrichtung im Bereich einer Montagefläche (4) sind Halterungen vorgesehen, die im wesentlichen aus Arretierungselementen (5) und in die Arretierungselemente (5) eingreifenden Verbindungselementen (6) bestehen. Die Verbindungselemente (6) sind in Ausnehmungen (7) geführt, die sich im wesentlichen senkrecht zur Montagefläche (4) erstrecken.

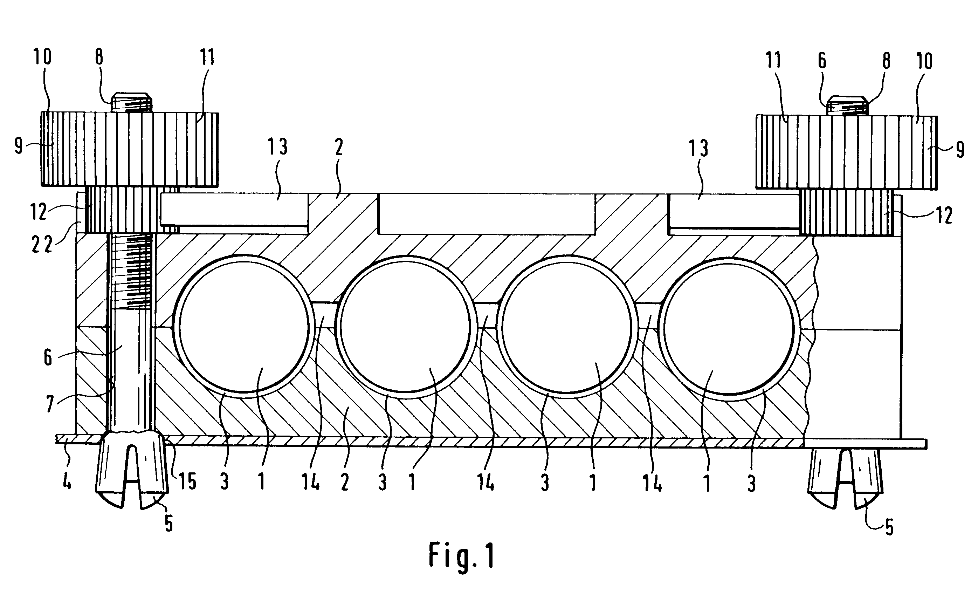

Bei der Ausführungsform gemäß Figur 1 sind zwei Einfassungselemente (2) vorgesehen, die im Bereich ihrer einander zugewandten Ausdehnungen jeweils mit halbzylindersegmentförmigen Ausnehmungen versehen sind, die nach einem Zusammenfügen zylinderförmige Aufnahmeräume (3) ausbilden. Zur Fixierung von mehreren Bauelementen (1), beispielsweise von Kabeln, Rohren, Stangen oder Seilen, sind vier Aufnahmeräume (3) nebeneinander angeordnet. Die Ausnehmungen (7) erstrecken sich durch die Einfassungselemente (2) hindurch und nehmen stiftförmig ausgebildete Verbindungselemente (6) auf. Im Bereich ihrer in die Arretierungselemente (5) eingreifenden Ausdehnung sind die Verbindungselemente (6) mit Verdickungen versehen, die bei einer Zugbelastung der Verbindungselemente zu einer Spreizung der Arretierungselemente (5) führen. Im Bereich ihrer den Arretierungselementen (5) abgewandten Ausdehnung weisen die Verbindungselemente (6) Außengewinde (8) auf, auf denen Muttern (9) geführt sind, die sowohl die Einfassungselemente (2) relativ zueinander verspannen als auch eine Positionierung der Verbindungselemente (6) relativ zu den Einfassungselementen (2) sowie relativ zum Arretierungselement (5) vornehmen.

Zur Verbesserung der Handhabung ist vorgesehen, die Muttern (9) mit Bedienelementen (10) auszurüsten, die oberhalb des der Montagefläche (4) abgewandten Einfassungselementes (2) angeordnet sind und eine Außenriffelung (11) zur Verbesserung der Griffigkeit aufweisen. Darüber hinaus sind die Muttern (9) mit Rastungen (12) versehen, in die federnd gelagerte Sperrhebel (13) eingreifen. Durch das Zusammenwirken der Sperrhebel (13) und der Rastungen (12) wird ein unbeabsichtigtes Verdrehen der Muttern (9) und damit ein Lösen der Einfassungselemente (2) verhindert. Eine ausreichende Verspannung der Bauelemente (1) im Bereich der Aufnahmeräume (3) wird dadurch unterstützt, daß zumindest eines der Einfassungselemente (2) im Bereich der einander zugewandten Begrenzungsflächen jeweils zwischen zwei Ausnehmungen (7) mit einer Aussparung (14) versehen ist, die dazu führt, daß die Einfassungselemente (2) auch bei Fertigungstoleranzen an allen Bauelementen (2) anliegen.

Zur Durchführung einer Montage ist es möglich, die Arretierungselemente (5) gemeinsam mit den Verbindungselementen (6) in Montageausnehmungen (15) einzuführen, die im Bereich einer beispielsweise plattenförmigen Montagefläche (4) angeordnet sind und durch ein Anziehen der Mutter (9) eine Verspreizung der Arretierungselemente (5) vorzunehmen. Hierdurch wird sowohl die Fixierung im Bereich der Montagefläche (4) als auch die Fixierung der Bauelemente (1) im Bereich der Aufnahmeräume (3) durchgeführt.

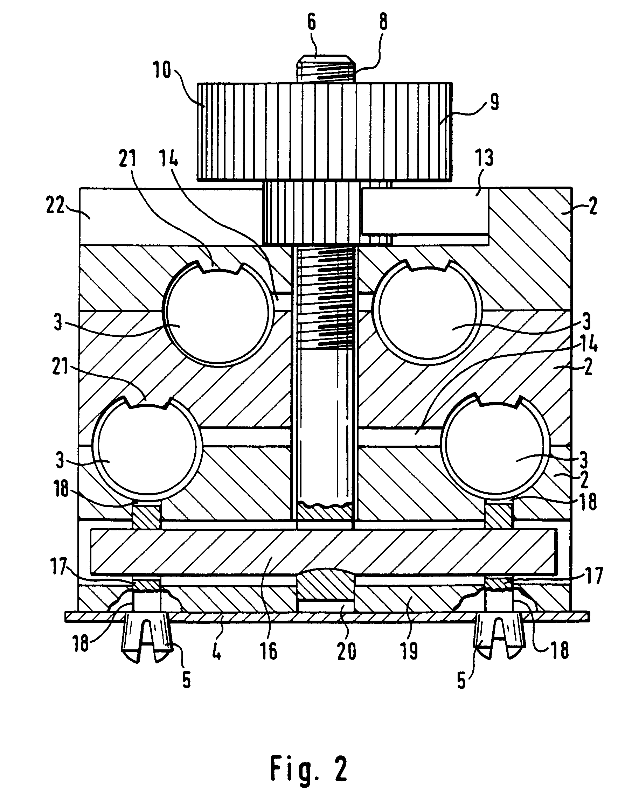

Statt einer Zuordnung jeweils eines Verbindungselementes (6) zu jeweils einem Arretierungselement (5) ist es gemäß der Ausführungsform in Figur 2 auch möglich, ein zentrales Verbindungselement (6) zu verwenden und dieses im Bereich seines der Mutter (9) abgewandten Endes mit einem Verteilelement (16) zu verbinden, das die vom Verbindungselement (6) vorgegebene Positionierbewegung auf Verriegelungselemente (17) überträgt, die in die Arretierungselemente (5) eingreifen. Bezüglich der Durchführung der Arretierung im Bereich der Montagefläche (4) wird das Verbindungselement (6) somit funktionell um das Verteilelement (16) und die Verriegelungselemente (17) ergänzt. Das Verteilelement (16) kann Steg- oder plattenförmig ausgebildet sein. Zur Vermeidung von Verkantungen und Verspannungen ist insbesondere daran gedacht, die Verriegelungselemente (17) sowohl im Bereich ihrer der Montagefläche (4) zugewandten Ausdehnung als auch im Bereich ihrer der Montagefläche (4) abgewandten Ausdehnung in Führungsausnehmungen (18) zu lagern. Die Führungsausnehmungen (18) können beispielsweise im Bereich einer Basisplatte (19) sowie im Bereich eines der Einfassungselemente (2) angeordnet sein. Zur Führung des Verbindungselementes (6) kann im Bereich der Basisplatte (19) eine weitere Führungsausnehmung (20) angeordnet sein.

Zur Ausbildung der Aufnahmeräume (3) sind drei Einfassungselemente (2) übereinander angeordnet. Das mittlere Einfassungselement (2) ist im Bereich seiner den anderen Einfassungselementen (2) zugewandten Begrenzungen jeweils mit Vertiefungen versehen, die gemeinsam mit korrespondierenden Vertiefungen im Bereich der anderen Einfassungselemente (2) die Aufnahmeräume (3) ausbilden. Es sind hier in zwei Ebenen übereinander jeweils zwei Aufnahmeräume (3) vorgesehen. Die nebeneinander liegenden Aufnahmeräume (3) sind von Aussparungen (14) zur Gewährleistung einer ausreichenden Einspannung der Bauelemente (1) verbunden. Zur Gewährleistung einer zusätzlichen Fixierung der Bauelemente (1) im Bereich der Aufnahmeräume (3) sind Vorsprungelemente (21) vorgesehen, die ausgehend von mindestens einem der Einfassungselemente (2) in die Aufnahmeräume (3) hineinragen. Die Vorsprungelemente (21) können beispielsweise stegförmig ausgebildet sein und im Bereich ihrer dem Bauelement (1) zugewandten Ausdehnung mit einer bogenförmigen Begrenzung versehen werden. Im Bereich einer Oberseite des dem Bedienelement (10) zugewandten Einfassungselementes (2) ist dem Sperrhebel (13) abgewandt eine Rippe (22) vorgesehen, die die Außenkontur ergänzt.

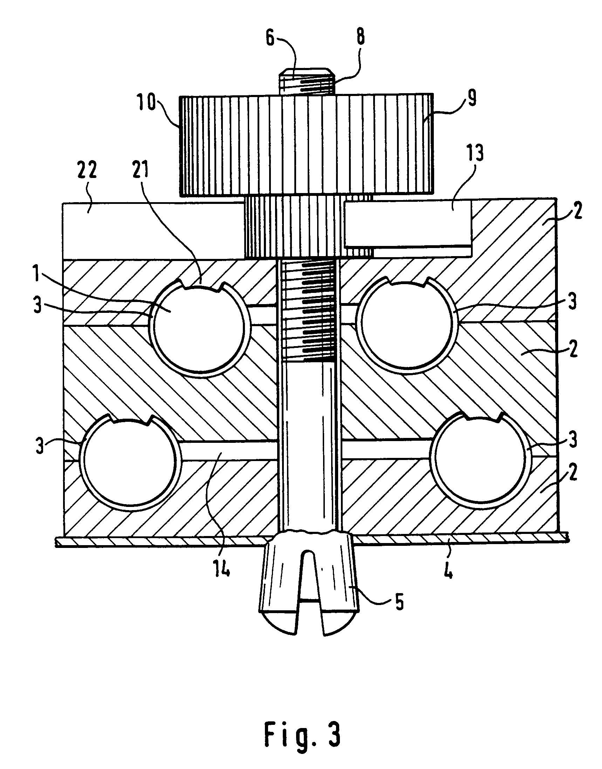

In der vereinfachten Ausführungsform gemäß Figur 3 ist ebenfalls ein zentrales Verbindungselement (6) vorgesehen, das allerdings im Bereich seines dem Bedienelement abgewandten Endes unmittelbar in das Arretierungselement (5) eingreift. Bei dieser Ausführungsform wird lediglich ein Arretierungselement (5) verwendet, das deshalb zweckmäßigerweise großvolumiger dimensioniert wird. Mit Hilfe der Vorsprungelemente (21) kann bei Bauelementen (1), die mit entsprechenden Ausnehmungen versehen sind, auch eine verdrehsichere Fixierung erfolgen.

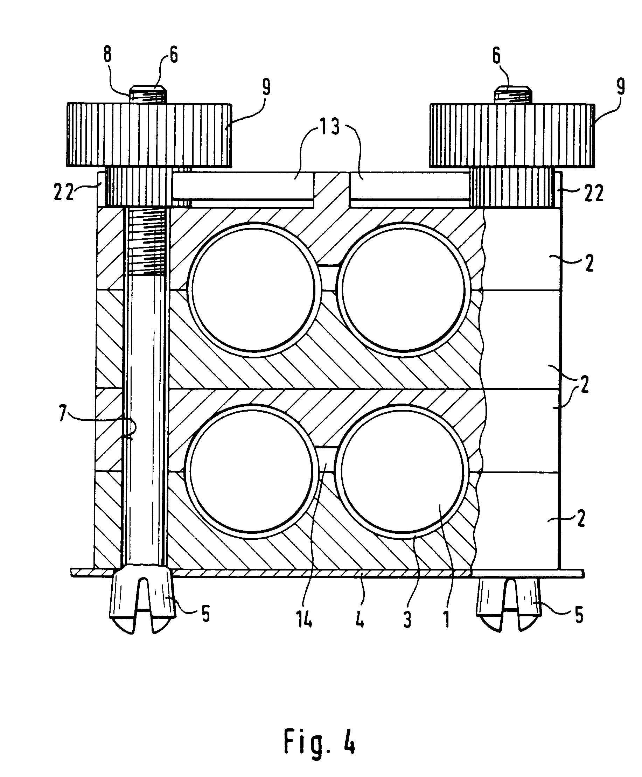

Alternativ zu der in Figur 1 dargestellten Ausführungsform können die Aufnahmeräume (3) ebenfalls derart in mehreren Lagen übereinander angeordnet werden, daß die Einfassungselemente (2) jeweils im Bereich einer ihrer Begrenzungsflächen mit Vertiefungen zur Ausbildung der Aufnahmeräume (3) versehen sind. Eine derartige zweilagige Anordnung von Aufnahmeräumen (3) ist in Figur 4 dargestellt. Abwechselnd sind hierbei jeweils stützende Einfassungselemente (2) und mit den Aussparungen (14) versehene spannende Einfassungselemente (2) übereinander angeordnet.

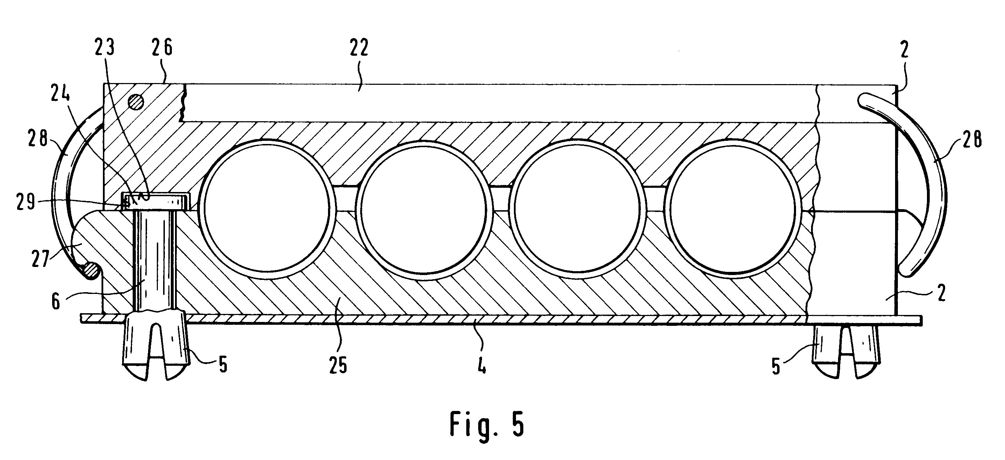

Eine Fixierung der Arretierungselemente (5) im Bereich der Montagefläche (4) kann entsprechend der Ausführungsform in Figur 5 auch durch eine Schubbewegung der Bewegungselemente (6) erfolgen. Die Verbindungselemente (6) weisen dazu Auflageflächen (23) auf, die im Bereich von Kopfelementen (24) angeordnet sein können, die im Bereich der den Arretierungselementen (5) abgewandten Ausdehnung der Verbindungselemente (6) vorgesehen sind. Für eine einlagige Anordnung der Aufnahmeräume (3) sind als Einfassungselemente (2) ein Basiselement (25) sowie ein Deckelelement (26) vorgesehen. Das Basiselement (25) weist seitlich angeordnete Rastungen (27) auf, in die Spannbügel (28) eingreifen, die verschwenkbar im Bereich des Deckelelementes (26) gelagert sind. Insbesondere ist es auch möglich, das Deckelelement (26) relativ zum Basiselement (25) verschwenkbar anzuordnen. Es ist aber auch möglich, eine abnehmbare Ausführungsform vorzusehen. Als Spannbügel (28) können beispielsweise Clipfedern verwendet werden. Zur Aufnahme der Kopfelemente (24) weist das Deckelelement (26) Aussparungen (29) auf. Das Verbindungselement (6) ist von oben in das Basiselement (25) einsetzbar.

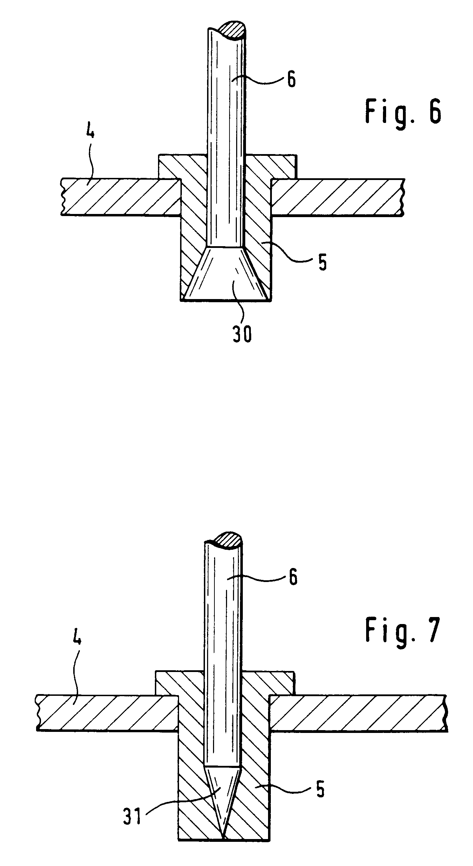

Zur Veranschaulichung der Wirkungsweise der Arretierungselemente (5) ist in Figur 6 ein Arretierungselement (5) dargestellt, daß durch ein Anheben des Verbindungselementes (6) spreizbar ist. Das Verbindungselement (6) weist dazu einen Spreizkopf (30) auf, der das Arretierungselement (5) auseinanderdrückt. Bei der Ausführungsform gemäß Figur 7 ist das Verbindungselement (6) im wesentlichen stiftförmig ausgebildet und drückt bei einem Absenken einen verdickten Endbereich (31) des Arretierungselementes (5) auseinander.

## Patentansprüche

1. Vorrichtung zur Fixierung von Bauelementen (1), die relativ zu ihrer Querschnittfläche eine große Längserstreckung aufweisen, insbesondere zur Verwendung im Bereich der Luft- und Raumfahrt, die eine einer Montagefläche (4) zuwendbare Halterung aufweist und mit mindestens einer Ausnehmung versehen ist, die sich im wesentlichen senkrecht zur Montagefläche (4) erstreckt und in der ein Verbindungselement (16) geführt ist, und bei der das Verbindungselement (6) im Bereich seiner der Montagefläche (4) zugewandten Ausdehnung in ein die Halterung mindestens teilweise ausbildendes Arretierungselement (5) eingreift, und bei der zur Ausbildung mindestens eines zur Führung des Bauelementes (1) vorgesehenen Aufnahmeraumes (3) übereinander mindestens zwei den Aufnahmeraum (3) jeweils bereichsweise begrenzende Einfassungselemente (2) angeordnet sind und mindestens ein Spannelement zur gleichzeitigen Einspannung des Bauelementes (1) im Bereich des Aufnahmeraumes (3) sowie zur Verspannung der Arretierungselemente (5) im Bereich der Montagefläche (4) mit dem Verbindungselement (6) koppelbar ist, dadurch gekennzeichnet, daß das Arretierungselement (5) vom Verbindungselement (6) spreizbar ist.

2. Vorrichtung nach Anspruch 1, dadurch gekennzeichnet, daß das Verbindungselement (6) im wesentlichen stiftförmig ausgebildet ist und im Bereich seiner dem Arretierungselement (5) zugewandten Ausdehnung einen Spreizkopf (30) aufweist sowie im Bereich seiner dem Spreizkopf (30) abgewandten Ausdehnung mit einem Außengewinde (8) versehen ist, in das eine die Spannvorrichtung ausbildende Mutter (9) eingreift.

3. Vorrichtung nach Anspruch 1 oder 2, dadurch gekennzeichnet, daß die Mutter (9) im Bereich eines Bedienelementes (10) angeordnet ist sowie mit einer entlang eines äußeren Umfanges angeordneten Rastung (12) versehen ist, in die ein mit einem der Einfassungselemente (2) verbundener Sperrhebel (13) eingreift.

4. Vorrichtung nach einem der Ansprüche 1 bis 3, dadurch gekennzeichnet, daß zwischen mindestens zwei nebeneinander angeordneten Aufnahmeräumen (3) zur Realisierung einer Spannfunktion eine Aussparung (14) angeordnet ist.

5. Vorrichtung nach einem der Ansprüche 1 bis 4, dadurch gekennzeichnet, daß mindestens zwei Aufnahmeräume (3) in einer Lage nebeneinander angeordnet sind.

6. Vorrichtung nach einem der Ansprüche 1 bis 5, dadurch gekennzeichnet, daß zumindest zwei Aufnahmeräume (3) in übereinander angeordneten Ebenen vorgesehen sind.

7. Vorrichtung nach einem der Ansprüche 1 bis 6, dadurch gekennzeichnet, daß mindestens ein Einfassungselement (2) im Bereich von zwei einander abgewandten Begrenzungsflächen mit die Aufnahmeräume (3) teilweise ausbildenden Vertiefungen versehen ist.

8. Vorrichtung nach einem der Ansprüche 1 bis 7, dadurch gekennzeichnet, daß im Bereich mindestens eines der Aufnahmeräume (3) mindestens ein Vorsprungelement (21) angeordnet ist, das in den Aufnahmeraum (3) hineinragt.

9. Vorrichtung nach Anspruch 8, dadurch gekennzeichnet, daß das Vorsprungelement (21) stegförmig ausgebildet und mit einer dem Bauelement (1) zuwendbaren gerundeten Kontur versehen ist.

10. Vorrichtung nach einem der Ansprüche 1 bis 9, dadurch gekennzeichnet, daß das Verbindungselement (6) im Bereich seiner dem Bedienelement (10) abgewandten Ausdehnung in ein Verteilelement (16) einmündet, das in die Arretierungselemente (5) eingreifende Verriegelungselemente (17) trägt.

11. Vorrichtung nach Anspruch 10, dadurch gekennzeichnet, daß mindestens eines der Verriegelungselemente (17) sowohl im Bereich seiner einem der Einfassungselemente (2) zugewandten Ausdehnung als auch im Bereich seiner einer Basisplatte (19) zugewandten Ausdehnung in Führungsausnehmungen (18) gelagert ist.

12. Vorrichtung nach einem der Ansprüche 1 bis 11, dadurch gekennzeichnet, daß das Verbindungselement (6) im Bereich seiner dem Arretierungselement (5) abgewandten Ausdehnung mit einer Auflagefläche (23) versehen ist, die von einer das Verbindungselement (6) in den Bereich des Arretierungselementes (5) hineinverschiebenden Traverse beaufschlagbar ist.

13. Vorrichtung nach Anspruch 12, dadurch gekennzeichnet, daß die Traverse als ein Einfassungselement (2) ausgebildet ist.

14. Vorrichtung nach einem der Ansprüche 1 bis 13, dadurch gekennzeichnet, daß das der Montagefläche (4) abgewandte Einfassungselement (2) relativ zu mindestens einem weiteren Einfassungselement (2) verschwenkbar angeordnet ist.

15. Vorrichtung nach einem der Ansprüche 1 bis 14, dadurch gekennzeichnet, daß mindestens zwei Einfassungselemente (2) von mindestens einem in eine Rastung (27) eingreifenden Spannbügel (28) miteinander verbindbar sind.

## Claims

1. Device for securing structural elements (1) that have a large longitudinal extent relative to their cross-sectional area, in particular for use in the field of aviation and space travel, which has a holding device that is capable of being turned towards a mounting surface (4) and is provided with at least one recess which extends substantially perpendicular to the mounting surface (4) and in which a connecting element (6) is guided, and with which the connecting element (6) in the region of its extension that is turned towards the mounting surface (4) engages a retaining element (5) that at least partially constitutes the holding device, and with which, with a view to forming at least one receiving chamber (3) that is provided for guiding the structural element (1), at least two enclosing elements (2) bordering the receiving chamber (3) zonally in each case are arranged above one another and at least one tensioning element for simultaneous clamping of the structural element (1) in the region of the receiving chamber (3) and also for bracing the retaining elements (5) in the region of the mounting surface (4) is capable of being coupled with the connecting element (6), characterised in that the retaining element (5) is capable of being splayed away from the connecting element (6).

2. Device according to Claim 1, characterised in that the connecting element (6) is designed to be substantially pin-shaped and in the region of its extension that is turned towards the retaining element (5) comprises a splaying head (30) and in the region of its extension that is turned towards the splaying head (30) is provided with an external thread (8) which is engaged by a nut (9) constituting the tensioning device.

3. Device according to Claim 1 or 2, characterised in that the nut (9) is arranged in the region of an operating element (10) and is provided with a snap-in device (12) arranged along an external perimeter, into which snap-in device there engages a catch lever (13) which is connected to one of the enclosing elements (2).

4. Device according to one of Claims 1 to 3, characterised in that a recess (14) is arranged between at least two receiving chambers (3) arranged next to one another with a view to implementing a tensioning function.

5. Device according to one of Claims 1 to 4, characterised in that at least two receiving chambers (3) are arranged next to one another in one position.

6. Device according to one of Claims 1 to 5, characterised in that at least two receiving chambers (3) are provided in planes arranged above one another.

7. Device according to one of Claims 1 to 6, characterised in that in the region of two boundary surfaces facing away from one another at least one enclosing element (2) is provided with recesses partially constituting the receiving chambers (3).

8. Device according to one of Claims 1 to 7, characterised in that in the region of at least one of the receiving chambers (3) at least one projecting element (21) is arranged which protrudes into the receiving chamber (3).

9. Device according to Claim 8, characterised in that the projecting element (21) is designed in the form of a bridge and is provided with a rounded contour that is capable of being turned towards the structural element (1).

10. Device according to one of Claims 1 to 9, characterised in that the connecting element (6) in the region of its extension that is turned towards the operating element (10) leads into a distributor element (16) which bears locking elements (17) engaging the retaining elements (5).

11. Device according to Claim 10, characterised in that at least one of the locking elements (17) is mounted in guide recesses (18) both in the region of its extension that is turned towards one of the enclosing elements (2) and in the region of its extension facing towards a base plate (19).

12. Device according to one of Claims 1 to 11, characterised in that the connecting element (6) is provided in the region of its extension that is turned away from the retaining element (5) with a locating surface (23) which is capable of being impinged by a crossbar displacing the connecting element (6) into the region of the retaining element (5).

13. Device according to Claim 12, characterised in that the crossbar is designed as an enclosing element (2).

14. Device according to one of Claims 1 to 13, characterised in that the enclosing element (2) facing away from the mounting surface (4) is arranged to be capable of tilting relative to at least one additional enclosing element (2).

15. Device according to one of Claims 1 to 14, characterised in that at least two enclosing elements (2) of at least one tensioning clamp (28) which engages a snap-in device (27) are capable of being connected to one another.

## Revendications

1. Dispositif destiné à la fixation d'éléments de construction (1) présentant par rapport à la surface transversale une grande dimension longitudinale, ledit dispositif étant en particulier utilisé dans le domaine de l'aéronautique et de l'astronautique, de même qu'il présente une fixation tournée vers une surface de montage (4) et qu'il est pourvu d'au moins un creux s'étendant principalement perpendiculairement à la surface de montage (4) et dans lequel est inséré un élément de fixation (6), ledit élément de fixation (6) s'engrenant dans la zone de son extension tournée vers la surface de montage (4) dans un élément d'arrêt (5) formant au moins partiellement la fixation, dispositif dans le cas duquel également sont prévus, afin de former au moins un espace de réception (3) prévu pour le guidage de l'élément de construction (1), deux éléments d'encadrement (2) superposés limitant partiellement l'espace de réception (3) de même qu'au moins un élément de serrage destiné au blocage simultané de l'élément de construction (1) dans la zone de l'espace de réception (3) ainsi qu'à la déformation des éléments d'arrêt (5) dans la zone de la surface de montage (4) peut être accouplé à l'élément de fixation (6), caractérisé en ce que l'élément d'arrêt (5) peut être élargi par l'élément de fixation (6).

2. Dispositif selon la revendication 1, caractérisé en ce que l'élément de fixation (6) est conçu principalement en forme de broche et présente dans la zone de son extension tournée vers l'élément d'arrêt (5) une tête d'écartement (30), de même qu'il est pourvu dans la zone de son extension opposée à la tête d'écartement (30) d'un filetage mâle sur lequel s'engrène un écrou (9) formant le dispositif de serrage.

3. Dispositif selon l'une ou l'autre des revendications 1 et 2, caractérisé en ce que l'écrou (9) est disposé dans la zone d'un élément de réglage (10) et qu'il est pourvu d'un crantage (12) disposé sur sa périphérie extérieure et dans laquelle s'engrène un levier d'arrêt (13) relié à un des éléments d'encadrement (2).

4. Dispositif selon l'une ou l'autre des revendications 1 à 3, caractérisé en ce que un évidement (14) est placé entre au moins deux espaces de réception (3) juxtaposés afin de réaliser une fonction de serrage.

5. Dispositif selon l'une ou l'autre des revendications 1 à 4, caractérisé en ce que au moins deux espaces de réception (3) sont juxtaposés.

6. Dispositif selon l'une ou l'autre des revendications 1 à 5, caractérisé en ce que au moins deux espaces de réception (3) sont prévus sur des plans superposés.

7. Dispositif selon l'une ou l'autre des revendications 1 à 5, caractérisé en ce que au moins un élément d'encadrement (2) est pourvu dans la zone de deux surfaces de limitation opposées l'une à l'autre d'évidements formant partiellement les espaces de réception (3).

8. Dispositif selon l'une ou l'autre des revendications 1 à 7, caractérisé en ce que dans la zone d'au moins un des espaces de réception (3) est disposé au moins un élément en saillie (21) faisant saillie dans l'espace de réception (3).

9. Dispositif selon la revendication 8, caractérisé en ce que l'élément en saillie (21) est conçu en forme de barrette et est pourvu d'un profil arrondi tourné vers un élément de construction (1).

10. Dispositif selon l'une ou l'autre des revendications 1 à 9, caractérisé en ce que l'élément de fixation (6) est relié à un élément de connexion (16) dans la zone de son extension opposée à l'élément de réglage (10), ledit élément de connexion portant les éléments de fixation (17) s'engrenant dans les éléments d'arrêt (5).

11. Dispositif selon la revendication 10, caractérisé en ce que au moins un des éléments de fixation (17) est disposé dans des creux de guidage (18) aussi bien dans la zone de son extension tournée vers un des éléments d'encadrement (2), que dans la zone de son extension tournée vers une plaque de base (19).

12. Dispositif selon l'une ou l'autre des revendications 1 à 11, caractérisé en ce que l'élément de fixation (6) est pourvu dans la zone de son extension opposée à l'élément d'arrêt (5) d'une surface d'appui (23) pouvant être mise en contact avec une traverse faisant coulisser l'élément de fixation (6) dans la zone de l'élément d'arrêt (5).

13. Dispositif selon la revendication 12, caractérisé en ce que la traverse est conçue comme un élément d'encadrement (2).

14. Dispositif selon l'une ou l'autre des revendications 1 à 13, caractérisé en ce que l'élément d'encadrement (2) opposé à la surface de montage (4) est disposé de manière à pouvoir pivoter par rapport à au moins un autre élément d'encadrement (2).

15. Dispositif selon l'une ou l'autre des revendications 1 à 14, caractérisé en ce que au moins deux éléments d'encadrement (2) peuvent être reliés entre eux par au moins une bride de fixation (28) s'engrenant dans une position de crantage (27).
